# EUROPÄISCHE PATENTSCHRIFT

(11) **EP 0 465 779 B1**
(45) Veröffentlichungstag und Bekanntmachung des Hinweises auf die Patenterteilung: **12.01.1994**
(21) Anmeldenummer: 91106633.0
(22) Anmeldetag: 25.04.1991
(51) Int. Cl.: B60R 21/02

(54) **Knieschutz in einem Kraftwagen**
Knee bolster in an automotive vehicle
Dispositif de protection des genoux dans un véhicule automobile

(30) Priorität: 03.07.1990 DE 4021145
(43) Veröffentlichungstag der Anmeldung: 15.01.1992
(73) Patentinhaber: MERCEDES-BENZ AG, 70327 Stuttgart (DE)
(72) Erfinder: Wetzel, Guido, W-7030 Böblingen (DE); Henseler, Wolfgang, W-7400 Tübingen (DE); Müller, Manfred, W-7301 Deizisau (DE)

(56) Entgegenhaltungen:
- DE-A- 2 537 212
- DE-A- 2 623 147
- DE-C- 3 413 768

## Beschreibung

Die Erfindung betrifft einen Knieschutz in einem Kraftwagen, bestehend aus einem beim Aufprall der Knie eines Insassen sich plastisch verformenden Element, das mittels eines Servoantriebes von einer ein bequemes Besteigen und Verlassen des Kraftwagens zulassenden kniefernen Position in eine sicherbare knienahe Position überführbar ist.

Ein derart beim öffnen der Zugeordneten Tür in seine Außergebrauchsstellung zurückfahrbarer Knieschutz, der zusammen mit einem aus einem Schrägschultergurt bestehenden Gurtsystem ein wirkungsvolles Rückhaltesystem bildet, ist durch die DE-A- 25 37 212 bekannt.

Aufgabe der Erfindung ist es, unter Einbeziehung eines Knieschutzes ein Rückhaltesystem zu schaffen, das bei konsequenter Nutzung ein Größtmaß an Bewegungsfreiheit zuläßt und im Bedarfsfall unter Hinweis auf die nicht ordnungsgemäße Nutzung des Rückhaltesystems ein gefährliches Abgleiten zum Fußraum hin verhindert.

Diese Aufgabe wird dadurch gelöst, daß der Befehl zum Überfuhren des Knieschutzes in seine knienahe Position im Fahrbetrieb durch bei Nichtbenutzung eines Dreipunkt-Sicherheitsgurtsystems ansprechende Mittel erfolgt. Bei ordnungsgemäßer Nutzung des Dreipunkt-Sicherheitsgurtes verbleibt der Knieschutz somit in seiner die Bewegungsfreiheit des zugeordneten Insassen nicht beschränkenden kniefernen Stellung, während beim Aufnehmen der Fahrt ein nicht angegurteter Insasse durch das Ausfahren des Knieschutzes in seine knienahe Position auf sein Fehlverhalten aufmerksam gemacht wird. Wird daraufhin der Dreipunkt-Sicherheitsgurt noch angelegt, fährt der Knieschutz in seine Außergebrauchsstellung zurück, während er bei einer Nichtinanspruchnahme des Gurtes in seiner ausgefahrenen Stellung verbleibt und somit den zugeordnet sitzenden Insassen im Aufprallfall vor einem verletzungsträchtigen Abgleiten zum Fußraum hin bewahrt.

Bei einem Ausführungsbeispiel der Erfindung bestehen die den Auslöse-Befehl erteilenden Mittel aus einem durch die einsteckbare Gurtzunge betätigbaren Kontakt.

Die Mittel können aber auch von einer den Wickeldurchmesser eines Gurtrollers abfühlenden Kontakteinrichtung gebildet werden.

Bei einem bevorzugten Ausführungsbeispiel der Erfindung weist der Knieschutz mindestens eine in einer Führung verschiebbare Halterung auf und sowohl die Fuhrung als auch die Halterung ist mit in Ausfahrposition einander Zugekehrten Rastzähnen versehen, wobei vorzugsweise die führungsseitigen Rastzähne durch einen Schlauch aus leicht deformierbarem Material abgedeckt sind, der durch eine aufprallbedingte Belastung der Halterung von deren Rastzähnen beim Eingriff in die Rastzähne der Führung verformt wird. Damit wird eine einfach aufgebaute und bereits während des Ausfahrvorganges sicher ansprechbare Verriegelung und Abstützung erreicht.

Der Gegenstand der Erfindung wird nachfolgend anhand eines in der Zeichnung dargestellten Ausführungsbeispiels näher erläutert. Es zeigt:
- Fig. 1: eine schematische Seitenansicht eines einem vorn sitzenden Beifahrer zugeordneten Knieschutzes und
- Fig. 2: die Position der führungsseitigen und halterungsseitigen Rastzähne bei voll ausgefahrenem Knieschutz.

Ein nicht näher dargestellter Personenkraftwagen 1 weist einen Fahrernebensitz 2 auf, dessen Benutzer in bekannter Weise durch ein Dreipunkt-Sicherheitsgurtsystem 3 gesichert ist. Durch das Einstecken der zugeordneten Gurtzunge 4 in das Gurtschloß 5 ist ein dort untergebrachter Kontakt 6 geöffnet, der über eine Leitung 7 mit einem Servogerät 8 und über eine Leitung 9 mit einem weiteren Kontakt 10 verbunden ist, welcher seinerseits über eine Leitung 11 am Pluspol einer nicht gezeigten Fahrzeugbatterie angeschlossen ist. Der Kontakt 10, der z.B. Bestandteil eines Zündanlaßschalters sein kann oder aber auch einen Bestandteil eines bereits bei geringer Fahrgeschwindigkeit sich schließenden Schalters bilden kann, ist geschlossen und signalisiert somit den Fahrbetrieb des Kraftwagens.

Der Kontakt 6 im Gurtschloß 5 stellt ein Mittel 12 dar, das darüber Auskunft gibt, ob das Dreipunkt-Sicherheitsgurtsystem 3 angelegt ist oder nicht. Das Mittel 12 kann auch - wie strichpunktiert angedeutet - durch eine den Wickeldurchmesser eines Gurtrollers 13 abfühlende Kontakteinrichtung 14 gebildet werden. Bei angelegtem Dreipunkt-Sicherheitsgurtsystem 3 ist der Kontakt 6 bzw. die Kontakteinrichtung 14 geöffnet, so daß das über eine Leitung 15 mit dem Negativpol der nicht dargestellten Fahrzeugbatterie in Verbindung stehende Servogerät 8 nicht angesteuert wird und somit der mit diesem gekoppelte Knieschutz 16 in seiner eingefahrenen, dem zugeordnet sitzenden Fahrgast die größte Bewegungsfreiheit verleihenden Stellung verbleibt.

Ist dagegen bei geschlossenem Kontakt 10 und damit im Fahrbetrieb das Dreipunkt-Sicherheitsgurtsystem nicht in Gebrauch, so ist der Kontakt 6 bzw. die Kontakteinrichtung 14 geschlossen, so daS das Servogerät 8 angesteuert wird und den Knieschutz 16 in die in strichpunktierten Linien angedeutete knienahe Position des Insassen überführt. Diesem wird somit signalisiert, daS das vorhandene Dreipunkt-Sicherheitsgurtsystem 3 nicht genutzt ist. Wird dieses nachträglich noch angelegt, so fährt der Knieschutz 16 wieder in seine Ausgangslage zurück. Wird dagegen auch weiterhin vom Dreipunkt-Sicherheitsgurtsystem 3 kein Gebrauch gemacht, so verbleibt der Knieschutz 16 in seiner knienahen Vorbringstellung, die im Aufprallfall durch sofortiges Abstützen der Knie des zugeordneten Insassen verhindert, daß dieser zum Fußraum hin abgleitet.

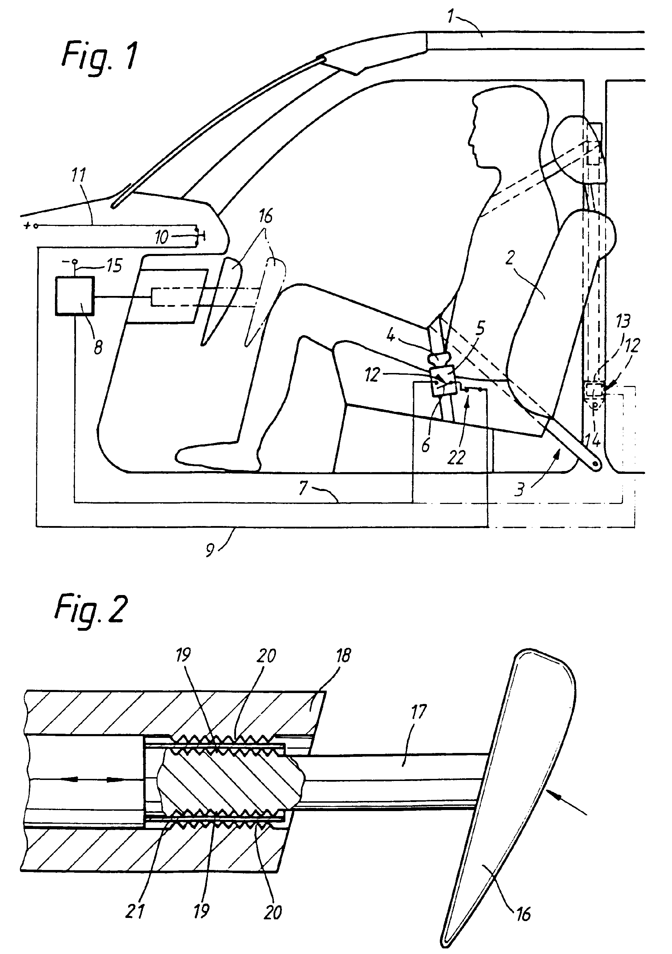

Gemäß Fig. 2 wird der Knieschutz 16 von mindestens einer Halterung 17 aufgenommen, die in einer fahrzeugfesten Führung 18 in Fahrzeuglängsrichtung verschiebbar ist. Die Halterung 17 weist einen Abschnitt mit Rastzähnen 19 und die Führung 18 einen Abschnitt mit Rastzähnen 20 auf, wobei die Anordnung so getroffen ist, daß die Rastzähne 19 und 20 bei ausgefahrenem Knieschutz 16 einander zugekehrt sind. Die Rastzähne 20 sind durch einen Schlauch 21 aus leicht deformierbarem Material abgedeckt, so daß im normalen Fahrbetrieb ein Ein- und Ausfahren des Knieschutzes 16 ohne gegenseitige Zahnberührung erfolgt.

Stoßen im Aufprallfall die Knie des zugeordnet sitzenden Insassen am ausgefahrenen Knieschutz 16 an, so erfolgt eine Krafteinleitung in denselben in Richtung des dargestellten Pfeiles. Dadurch führt die Halterung 17 eine Kippbewegung aus, bei der sich die Zähne 19 durch den sich deformierenden Schlauch 21 hindurchdrücken und sich darauf an den Zähnen 20 abstützen, so daß eine sichere Krafteinleitung gewährleistet ist. Diese Abstützwirkung wird auch dann herbeigeführt, wenn bereits während des Ausfahrvorganges des Knieschutzes 16 ein Aufprall stattfinden sollte.

Wird kein über die ganze Innenraumbreite reichender einteiliger Knieschutz, sondern ein jedem vorn sitzenden Insassen zugeordnet plazierter Knieschutzabschnitt vorgesehen, so wird zweckmäßigerweise im Fahrernebensitz 2 ein Sitzkontaktschalter 22 (Fig. 1) untergebracht, dessen Kontakt erst bei einer Sitzbenutzung geschlossen wird. Damit wird verhindert, daß der Knieschutzabschnitt auch bei unbesetztem Fahrernebensitz 2 ausfahren kann.

## Patentansprüche

1. Knieschutz (16) in einem Kraftwagen (1) mit einem Sicherheitsgurtsystem (3), bestehend aus einem beim Aufprall der Knie eines Insassen sich plastisch verformenden Element, das mittels eines Servoantriebes von einer ein bequemes Besteigen und Verlassen des Kraftwagens (1) zulassenden kniefernen Position in eine sicherbare knienahe Position überführbar ist,
**dadurch gekennzeichnet,**
daß der Befehl zum überführen des Knieschutzes (16) in seine knienahe Position im Fahrbetrieb durch bei Nichtbenutzung eines Dreipunkt-Sicherheitsgurtsystems (3) ansprechende Mittel (12) erfolgt.

2. Knieschutz nach Anspruch 1,
**dadurch gekennzeichnet,**
daß die Mittel (12) aus einem durch die einsteckbare Gurtzunge (5) betätigbaren Kontakt (6) bestehen.

3. Knieschutz nach Anspruch 1,
**dadurch gekennzeichnet,**
daß die Mittel (12) von einer den Wickeldurchmesser eines Gurtrollers (13) abfühlenden Kontakteinrichtung (14) gebildet werden.

4. Knieschutz nach einem oder mehreren der vorangegangenen Ansprüche,
**dadurch gekennzeichnet,**
daß der Knieschutz (16) mindestens eine in einer Führung (18) verschiebbare Halterung (17) aufweist und sowohl die Führung (18) als auch die Halterung (17) mit in Ausfahrposition des Knieschutzes (16) einander zugekehrten Rastzähnen (20, 19) versehen ist und daß vorzugsweise die führungsseitigen Rastzähne (20) durch einen Schlauch (21) aus leicht deformierbarem Material abgedeckt sind, der durch eine aufprallbedingte Belastung der Halterung (17) von deren Rastzähnen (19) beim Eingriff in die Rastzähne (20) der Führung verformt wird.

## Claims

1. Knee protection (16) in a motor vehicle (1) having a safety belt system (3), consisting of an element which deforms plastically in the event of an impact of the knees of a vehicle occupant, which element can be transferred by means of a servo drive from a remote-from-the-knee position which permits the motor vehicle (1) to be got in and out of comfortably into a securable close-to-the knee position, characterised in that the instruction for transferring the knee protection (16) into its close-to-the-knee position occurs in the driving mode by means (12) which are triggered when a three-point safety belt system (3) is not used.

2. Knee protection according to Claim 1, characterised in that the means (12) consist of a contact (6) which can be actuated by the insertable belt fastener (5).

3. Knee protection according to Claim 1, characterised in that the means (12) are formed by a contact device (14) which senses the winding diameter of a belt roller (13).

4. Knee protection according to one of more of the preceding claims, characterised in that the knee protection (16) has at least one bracket (17) which can be displaced in a guide (18), and both the guide (18) and the bracket (17) are provided with locking teeth (20, 19) facing one another in the extended position of the knee protection (16), and in that preferably the locking teeth (20) on the guide side are covered by a hose (21) of easily deformable material which is deformed by a loading of the bracket (17), caused by an impact, by its locking teeth (19) when they engage in the locking teeth (20) of the guide.

## Revendications

1. Dispositif de protection des genoux (16) dans un véhicule (1) avec un système à ceinture de sécurité (3), se composant d'un élément déformable plastiquement lors d'un impact par les genoux d'un occupant et qui peut être transféré, au moyen d'un servo-entraînement, depuis une position, éloignée des genoux et permettant commodément de monter dans le véhicule (1) et d'en sortir, jusque dans une position de sécurité proche des genoux,
caractérisé en ce que l'ordre de transfert du dispositif de protection des genoux (16) dans sa position proche des genoux en cours de marche est produit par des moyens (12) réagissant à une non-utilisation d'un système à ceinture de sécurité à trois points (3).

2. Dispositif de protection des genoux selon la revendication 1,
caractérisé en ce que les moyens (12) se composent d'un contact (6) pouvant être actionné par la languette de ceinture enfichable (5).

3. Dispositif de protection des genoux selon la revendication 1,
caractérisé en ce que les moyens (12) sont constitués par un dispositif de contact (14) détectant le diamètre d'enroulement d'un enrouleur de ceinture (13).

4. Dispositif de protection des genoux selon une ou plusieurs des revendications précédentes,
caractérisé en ce que le dispositif de protection des genoux (16) comporte au moins un support (17) déplaçable en translation dans un guide (18) et aussi bien le guide (18) que le support (17) sont pourvus de dents d'arrêt (20, 19) dirigées l'une vers l'autre dans la position de sortie du dispositif de protection des genoux (16) et en ce qu'avantageusement les dents d'arrêt (20) situées du côté du guide sont recouvertes par un tuyau souple (21) constitué d'une matière facilement déformable et qui est déformé lorsque, sous l'effet d'une collision, le support (17) est sollicité par ses dents d'arrêt (19) lors de leur engagement dans les dents d'arrêt (20) du guide.
